(19) Europäisches Patentamt

European Patent Office

Office européen des brevets

(11) **EP 1 612 062 A2**

(12) **DEMANDE DE BREVET EUROPEEN**

(43) Date de publication:
04.01.2006 Bulletin 2006/01

(51) Int Cl.:
*B60C 23/06* (2006.01)

(21) Numéro de dépôt: 05300503.9

(22) Date de dépôt: 22.06.2005

(84) Etats contractants désignés:
AT BE BG CH CY CZ DE DK EE ES FI FR GB GR
HU IE IS IT LI LT LU MC NL PL PT RO SE SI SK TR
Etats d'extension désignés:
AL BA HR LV MK YU

(30) Priorité: 30.06.2004 FR 0407226

(71) Demandeur: Peugeot Citroen Automobiles SA
78943 Vélizy-Villacoublay Cedex (FR)

(72) Inventeurs:
• **Gouriet, Pascal**
**92320, CHATILLON (FR)**
• **Djama, Zahir**
**75015, PARIS (FR)**

(74) Mandataire: **Fernandez, Francis Lionel**
**Peugeot Citroen Automobiles SA**
**Route de Gisy**
**78140 Velizy-Villacoublay (FR)**

(54) **Méthode de détection d'une anomalie de pression sur un pneumatique d'un véhicule automobile**

(57) L'invention concerne une méthode de détection d'une anomalie de pression sur un pneumatique d'un véhicule automobile.

Selon l'invention, la méthode comprend les étapes suivantes.

1/ Acquisition d'une valeur d'un paramètre représentatif de l'accélération verticale au centre de chaque roue,

2/ Estimation pour chaque roue arrière (13, 14) d'une valeur estimée du paramètre à partir des valeurs acquises à l'étape 1/ pour les roues avant (11, 12),

3/ et 4/ Estimation pour chaque roue arrière (13, 14) de première/seconde valeurs d'une grandeur représentative de la puissance de l'accélération verticale au centre de ladite roue à partir des valeurs acquises/estimées,

5/ Estimation d'un premier indicateur comparatif des première et seconde valeurs,

6/ Détection d'une éventuelle anomalie de pression à partir de la valeur du premier indicateur.

Fig.3

EP 1 612 062 A2

**Description**

L'invention concerne en général la sécurité des véhicules automobiles et la détection des dysfonctionnements à bord de ces véhicules.

Plus précisément, l'invention concerne selon un premier aspect une méthode de détection d'une anomalie de pression sur au moins un pneumatique d'un véhicule automobile pourvu d'au moins une roue à l'avant gauche et droit et à l'arrière gauche et droit.

Des méthodes d'évaluation de la pression des pneumatiques sont connues de l'art antérieur, notamment par mesures directes, ou par mesures indirectes à l'aide du dispositif antiblocage de roues dit « ABS ».

La mesure directe repose sur l'utilisation de capteurs disposés directement dans le pneumatique et communiquant par ondes avec un récepteur disposé à bord du véhicule.

Elle est coûteuse et peu fiable, et entraîne l'apparition de fausses alertes.

La méthode indirecte repose sur la détection de la variation de la circonférence de roulement du pneu, et donc de la vitesse de rotation de la roue, avec la pression du pneumatique.

Cette méthode est complexe et difficile à mettre au point car de nombreux paramètres doivent être pris en compte selon le type de pneu et le type de véhicule, notamment la charge. Par ailleurs, cette méthode n'est applicable que dans certaines conditions de conduite, quand l'adhérence de la roue sur le sol est bonne.

Dans ce contexte, la présente invention a pour but de pallier les défauts mentionnés ci-dessus.

A cette fin, la méthode de l'invention, par ailleurs conforme à la définition générique qu'en donne le préambule ci-dessus, est essentiellement caractérisée en ce qu'elle comprend au moins les étapes suivantes :

1/ Acquisition périodique pour chaque roue d'une valeur d'un paramètre représentatif de l'accélération verticale au centre de ladite roue,

2/ Estimation pour chaque roue arrière d'une valeur estimée dudit paramètre représentatif à partir des valeurs acquises à l'étape 1/ pour les roues avant,

3/ Estimation pour chaque roue arrière d'une première valeur d'une grandeur représentative de la puissance de l'accélération verticale au centre de ladite roue à partir des valeurs acquises à l'étape 1/,

4/ Estimation pour chaque roue arrière d'une deuxième valeur de ladite grandeur représentative à partir des valeurs estimées à l'étape 2/,

5/ Estimation d'un premier indicateur comparatif des première et seconde valeurs,

6/ Détection d'une éventuelle anomalie de pression à partir de la valeur du premier indicateur estimée à l'étape 5/.

La méthode de l'invention peut également présenter une ou plusieurs des caractéristiques avantageuses ci-dessous :

- Le paramètre représentatif de l'accélération verticale au centre de roue est choisi parmi l'accélération verticale au centre de roue, l'accélération verticale de la caisse au niveau de la roue, la vitesse verticale au centre de roue, la vitesse verticale de la caisse au niveau de la roue, la vitesse verticale relative caisse-roue, la position verticale du centre de roue, la position verticale de la caisse au niveau de la roue , l'écartement vertical entre la caisse et la roue, et l'effort vertical entre la caisse et la roue.

- La grandeur représentative de la puissance de l'accélération verticale au centre de roue est choisie parmi l'auto-corrélation de l'accélération verticale au centre de roue sur une période d'observation donnée, la variance de ladite accélération sur ladite période, la densité spectrale de puissance de ladite accélération, ou toute autre fonction permettant de calculer la moyenne glissante sur une fenêtre de temps de termes homogènes au carré de l'accélération verticale au centre de roue.

- La méthode comprend une étape 5'/ d'estimation d'un second indicateur comparatif des première et seconde valeurs différent du premier, la détection de l'étape 6/étant effectuée à partir des valeurs des premier et second indicateurs estimées aux étapes 5/ et 5'/.

- La méthode comprend une étape 5"/ d'estimation d'un troisième indicateur comparatif des première et seconde valeurs différent des premier et second indicateurs, la détection de l'étape 6/ étant effectuée à partir des valeurs des premier, second et troisième indicateurs estimées aux étapes 5/, 5'/ et 5''/.

- Le premier indicateur ou l'un des indicateurs compare un premier terme fonction de la première valeur estimée pour la ou les roues arrière gauche et de la seconde valeur estimée pour la ou les roues arrière droite, à un second terme fonction de la seconde valeur estimée pour la ou les roues arrière gauche et de la première valeur estimée pour la ou les roues arrière droite.

- Le premier indicateur ou l'un des indicateurs compare un premier terme fonction des premières valeurs à un second terme fonction des secondes valeurs.

- Le premier indicateur ou l'un des indicateurs compare un premier terme fonction des première et seconde valeurs estimées pour la ou les roues arrière gauche à un second terme fonction des première et seconde valeurs estimées pour la ou les roues arrière droite.

- La comparaison des premier et second termes est effectuée par différence entre les deux termes.
- La comparaison des premier et second termes est effectuée en calculant un rapport entre les deux termes.
- A l'étape 2/, la valeur estimée dudit paramètre représentatif pour une roue arrière est calculée en multipliant la valeur acquise pour la roue avant située du même côté par un gain prédéterminé.
- Le ou les indicateurs sont corrigés en fonction de la température extérieure et/ou de la vitesse du véhicule, à l'aide de cartographies prédéterminées.

D'autres caractéristiques et avantages de l'invention ressortiront clairement de la description qui en est faite ci-dessous, à titre indicatif et nullement limitatif, en référence aux figures annexées, parmi lesquelles :

- la figure 1 est une représentation schématique du modèle mécanique utilisé dans un premier mode de réalisation de la méthode selon l'invention,
- la figure 2 est une représentation graphique de l'évolution dans le temps de l'accélération verticale au centre de la roue avant d'un véhicule automobile (en haut), et de l'accélération au centre de la roue arrière située du même côté du véhicule que la roue avant (en bas), et
- la figure 3 est une schéma synoptique de la méthode de l'invention.

La méthode de détection s'applique à un véhicule automobile pourvu d'une caisse 15, de roues avant gauche et droite 11 et 12 et de roues arrière gauche et droite 13 et 14 reposant sur le sol, ces roues étant liées chacune par l'intermédiaire d'un dispositif de suspension 16 en un point C de la caisse 15 situé au voisinage de la roue.

Quand le véhicule roule sur le sol, les roues 11 à 14 subissent des efforts verticaux au contact du sol, ces efforts étant fonction, entre autres, de la masse du véhicule reposant sur la roue et du profil du sol sous les roues. Ces efforts sont transmis à la caisse 15 par la suspension, après amortissement partiel.

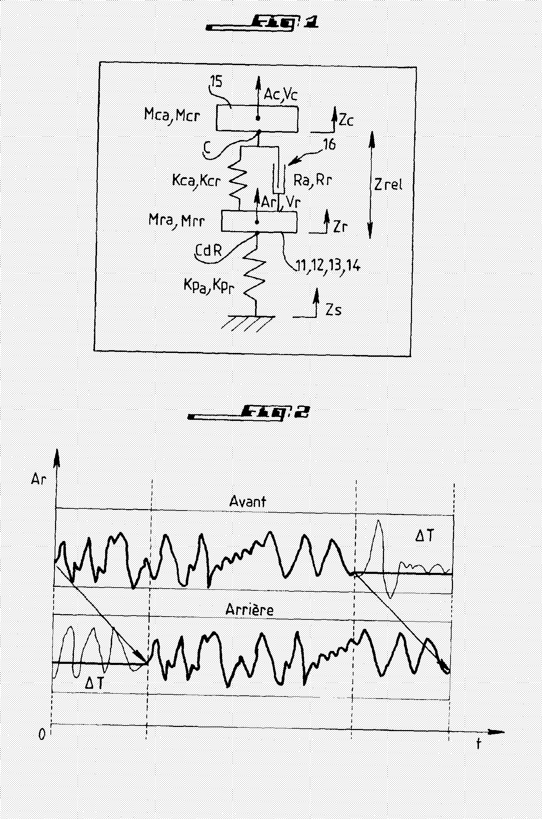

Sous l'effet de cet effort vertical, le centre CdR de chaque roue et le point C de la caisse 15 correspondant se déplacent verticalement. Comme le montre la figure 1, on note Zr l'altitude du centre de roue CdR au-dessus du sol, Zc l'altitude du point C de la caisse au-dessus du sol, Zrel l'écartement vertical entre le centre de roue CdR et le point C, Vr la vitesse verticale du centre de roue CdR, Vc la vitesse verticale du point C de la caisse 15, Vrel la vitesse verticale relative de la caisse par rapport à la roue, Ar l'accélération verticale au centre de roue CdR, Ac l'accélération verticale de la caisse au point C, et Frel l'effort vertical s'exerçant entre la caisse et la roue.

Ces différentes grandeurs évoluent en fonction de l'effort vertical appliqué par le sol à la roue, et en fonction de caractéristiques intrinsèques du véhicule qui seront détaillées plus loin, notamment de la raideur et du coefficient d'amortissement de la suspension liant la roue à la caisse et des caractéristiques de la roue.

Inversement, il est possible de déterminer l'évolution de l'accélération verticale au centre de chaque roue à partir de la mesure d'une des grandeurs mentionnées ci-dessus, par des moyens connus de l'art antérieur qui ne seront pas décrits en détail ici.

Ces grandeurs peuvent donc être considérées comme représentatives de l'accélération verticale au centre de roue.

La méthode repose sur le constat que les accélérations verticales aux centres des roues Cdr sont fonctions de la pression des pneumatiques Pn.

Selon l'invention, la méthode comprend au moins les étapes suivantes :

1/ Acquisition périodique pour chaque roue 11/12/13/14 d'une valeur Pa d'un paramètre P représentatif de l'accélération verticale Ar au centre de ladite roue,

2/ Estimation pour chaque roue arrière 13/14 d'une valeur estimée Pe dudit paramètre représentatif P à partir des valeurs Pa acquises à l'étape 1/ pour les roues avant 11/12,

3/ Estimation pour chaque roue arrière 13/14 d'une première valeur G13/G14 d'une grandeur G représentative de la puissance de l'accélération verticale Ar au centre de ladite roue à partir des valeurs acquises Pa à l'étape 1/,

4/ Estimation pour chaque roue arrière 13/14 d'une deuxième valeur G23/G24 de ladite grandeur représentative G à partir des valeurs Pe estimées à l'étape 2/,

5/ Estimation de la valeur d'un premier indicateur Indic1 comparatif des première et seconde valeurs G13/G14 et G23/G24,

6/ Détection d'une éventuelle anomalie de pression à partir de la valeur du premier indicateur Indic1 estimée à l'étape 5/.

Le paramètre représentatif P peut être l'accélération verticale Ar au centre de roue elle-même, ou être choisie parmi l'accélération verticale Ac de la caisse 15 au point C, la vitesse verticale Vr au centre de roue, la vitesse verticale

Vc de la caisse 15 au point C, la vitesse verticale relative caisse-roue Vrel, la position verticale Zr du centre de roue CdR, la position verticale Zc de la caisse 15 au point P, l'écartement vertical Zrel entre le point C de la caisse et le centre de roue CdR, et l'effort vertical Frel entre la caisse et la roue.

Ce paramètre peut être acquis directement à l'aide d'un capteur embarqué, par exemple un capteur d'accélération verticale, ou un capteur d'effort interposé entre le bras de suspension sur lequel la roue est montée et la caisse.

Le paramètre peut également être calculé à partir de grandeurs disponibles à bord du véhicule, par exemple dans le calculateur pilotant le dispositif antiblocage de roues (ABS), le dispositif de correction automatique de trajectoire (ESP) ou encore le dispositif de pilotage de la suspension.

Quand le paramètre représentatif P échantillonné à l'étape 1/ n'est pas l'accélération verticale Ar au centre de roue, la méthode comprend généralement une étape 1'/ d'estimation de la valeur de l'accélération verticale Ar au centre de roue en fonction de la valeur du paramètre représentatif P.

La grandeur G représentative de la puissance de l'accélération verticale Ar au centre de roue CdR peut être la fonction d'auto-corrélation X(l) de l'accélération verticale Ar au centre de roue sur une période d'observation donnée M x Te, généralement choisie entre 1 et 2 secondes.

Te est la période d'échantillonnage du paramètre représentatif P, M étant un entier prédéterminé.

La fonction d'auto-corrélation est calculée selon l'équation suivante :

$$X(l) = 1/M \times \left( \sum\nolimits^{i=1 \text{ à } M} Ar(i) \times Ar(M-i-l) \right),$$

avec 1 allant de —M à +M.

La puissance de l'accélération verticale Ar au centre de roue CdR correspond à la fonction d'auto-corrélation de cette accélération calculée en prenant 1 = 0.

La grandeur G peut également être la covariance de ladite accélération Ar avec elle-même sur la période M x Te.

Cette covariance se calcule selon la formule suivante :

$$V = 1/M \times \left( \sum\nolimits^{i=1 \text{ à } M} (Ar(i)-Mo)^2 \right)$$

, Mo étant la moyenne des M valeurs Ar(i) pour i = 1 à M.

On peut encore utiliser la densité spectrale de puissance de l'accélération verticale Ar, ou toute autre fonction permettant de calculer la moyenne glissante sur une fenêtre de temps de termes homogènes au carré de l'accélération verticale Ar.

On peut également calculer la transformée de Fourrier de ladite accélération Ar, ou un équivalent de cette transformée, et calculer l'auto-corrélation, la covariance, la puissance ou toute autre fonction du type ci-dessus pour cette transformée.

De manière avantageuse, on peut prévoir que la méthode comporte une étape 5'/ d'estimation d'un second indicateur Indic2 comparatif des première et seconde valeurs G13/G14 et G23/G24 de la grandeur représentative de la puissance de l'accélération verticale G, cet indicateur étant différent du premier indicateur Indic1. La détection de l'étape 6/ est alors effectuée à partir des valeurs des premier et second indicateurs Indic1 et Indic2 estimées aux étapes 5/ et 5'/. L'utilisation d'un second indicateur Indic2 permet d'identifier des cas de crevaisons impossibles à identifier avec un seul indicateur, comme on le verra plus loin.

La méthode peut encore comprendre une étape 5''/ d'estimation d'un troisième indicateur Indic3 comparatif des première et seconde valeurs G13/G14 et G23/G24 de la grandeur représentative de la puissance de l'accélération verticale G, cet indicateur étant différent des premier et second indicateurs Indic1 et Indic2. La détection de l'étape 6/ est alors effectuée à partir des valeurs des premier, second et troisième indicateurs Indic1, Indic2 et Indic3 estimées aux étapes 5/, 5'/ et 5''/. L'utilisation d'un troisième indicateur Indic3 permet d'identifier encore d'autres cas de crevaisons impossibles à identifier avec deux indicateurs seulement, comme on le verra plus loin.

On va maintenant décrire successivement deux exemples de réalisation de la méthode de l'invention.

Le premier exemple de réalisation repose sur une modélisation à deux degrés de liberté des interactions entre la caisse 15 du véhicule, chaque roue 11 à 14, et le sol.

Concernant chaque roue avant 11/12, on voit sur la figure 1 que la caisse 15 est assimilée à une masse Mca suspendue à la roue avant 11/12 de masse Mra par le dispositif de suspension 16 constitué d'un ensemble ressort/amortisseur caractérisé par une raideur Kca et un coefficient d'amortissement Ra.

Par ailleurs, la roue avant 11/12 porte un pneumatique reposant sur le sol, assimilé à un ressort de raideur verticale Kpa.

Concernant chaque roue arrière, la caisse 15 est de même assimilée à une masse Mcr suspendue à la roue arrière 13/14 de masse Mrr par le dispositif de suspension 16 constitué d'un ensemble ressort/amortisseur caractérisé par une raideur Kcr et un coefficient d'amortissement Rr.

Par ailleurs, la roue arrière 13/14 porte un pneumatique reposant sur le sol, assimilé à un ressort de raideur verticale Kpr.

On choisit dans ce premier exemple de réalisation l'accélération verticale au centre de roue Ar comme paramètre représentatif P.

A l'étape 2/, la valeur estimée Pe de l'accélération verticale au centre de la roue arrière gauche 13 est calculée en fonction de la valeur acquise Pa de l'accélération verticale au centre de la roue avant gauche 11 en utilisant la formule suivante :

$$Pe(p) = (Dena(p)/Numa(p)) \times (Numr(p)/Denr(p)) \times Pa(p)$$

Avec

Pa(p) = transformée de Laplace de l'accélération verticale au centre de la roue avant gauche 11,

Pe(p) = transformée de Laplace de l'accélération verticale au centre de la roue arrière gauche 13,

$$Numa(p) = Kra \times (Mca.p^2 + Ra.p + Kca)$$

$$Numr(p) = Krr \times (Mcr.p^2 + Rr.p + Kcr)$$

$$Dena(p) = Mra.Mca.p^4 + Ra.(Mca + Mra).p^3 + (Mra.Kca + Mca.(Kra + Kca)).p^2 + Ra.Kra.p + Kca.Kra$$

$$Denr(p) = Mrr.Mcr.p^4 + Rr.(Mcr + Mrr).p^3 + (Mrr.Kcr + Mcr.(Krr + Kcr)).p^2 + Rr.Krr.p + Kcr.Krr$$

La valeur estimée Pe de l'accélération verticale au centre de la roue arrière droite 14 est calculée en fonction de la valeur acquise de l'accélération verticale au centre de la roue avant droite 11 exactement de la même façon.

On choisit dans ce premier exemple de réalisation la puissance de l'accélération verticale au centre de roue Ar comme grandeur représentative G. On notera dans la suite G13/G14 respectivement les premières valeurs de la puissance de l'accélération verticale au centre des roues arrière gauche et droite 13 et 14, et G23/G24 respectivement les secondes valeurs de la puissance de l'accélération verticale au centre des roues arrière gauche et droite 13 et 14.

Le premier indicateur Indic1 fait la différence entre les « diagonales » :

$$Indic1 = (G23 + G14) - (G24 + G13)$$

Le second indicateur Indic2 fait la différence entre les premières et les secondes valeurs:

$$Indic2 = (G23 + G24) - (G13 + G14)$$

Le troisième indicateur fait la différence entre la droite et la gauche :

$$Indic3 = (G13 + G23) - (G14 + G24)$$

Par ailleurs, on notera que les roues arrière « voient » le même profil de sol que les roues avant, avec un décalage temporel $\Delta T$ correspondant à l'empattement du véhicule divisé par sa vitesse longitudinale.

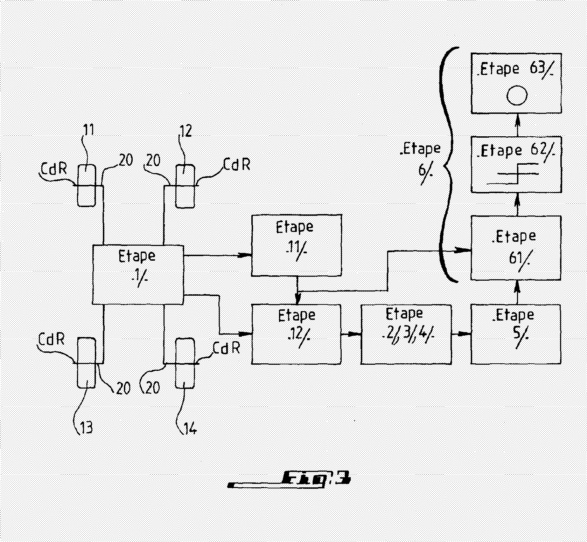

En situation nominale, quand les pneumatiques des quatre roues sont gonflés normalement, les accélérations verticales aux centres des roues arrière suivent donc les accélérations verticales aux centres des roues avant avec un décalage temporel de ΔT, comme le montre la figure 2.

Cette particularité est prise en compte pour le calcul des secondes valeurs G23/G24, ce calcul étant effectué sur un échantillon de valeurs de l'accélération verticale aux centres des roues avant 11/12 décalées de ΔT vers le passé par rapport à l'échantillon de valeurs de l'accélération verticale aux centres des roues arrière 13/14 utilisées pour calculer les premières valeurs G13/G14.

Dans la situation nominale, on a alors :

G13 = G23 ; et G14 = G24, ce dont il découle que Indic1 = Indic2 = Indic3 = 0

Quand il se produit une anomalie de pression sur un des pneumatiques, la puissance de l'accélération verticale de la roue arrière ne peut plus se déduire de celle de la roue avant avec un décalage temporel. Un ou plusieurs des indicateurs vont donc varier.

Le tableau 1 ci-dessous contient les premières et secondes valeurs des roues arrière gauche et droite dans différentes situations de vie, ainsi que les valeurs correspondantes des trois indicateurs, ces valeurs numériques étant données à titre indicatif seulement pour faciliter la compréhension du texte.

| Situation | valeurs estimées | | valeurs mesurées | | indicateur | | |
|---|---|---|---|---|---|---|---|
| | G23 | G24 | G13 | G14 | Indic1 | Indic2 | Indic3 |
| **Nominale** | 1,6 | 1,6 | 1,6 | 1,6 | 0 | 0 | 0 |
| **1 crevaison** | | | | | | | |
| Avant gauche | 0,8 | 1,6 | 1,6 | 1,6 | -0,8 | -0,8 | -0,8 |
| Avant droit | 1,6 | 0,8 | 1,6 | 1,6 | 0,8 | -0,8 | 0,8 |
| Arrière gauche | 1,6 | 1,6 | 0,8 | 1,6 | 0,8 | 0,8 | -0,8 |
| Arrière droit | 1,6 | 1,6 | 1,6 | 0,8 | -0,8 | 0,8 | 0,8 |
| **2 crevaisons identiques** | | | | | | | |
| Avant | 0,8 | 0,8 | 1,6 | 1,6 | 0 | -1,6 | 0 |
| Gauche | 0,8 | 1,6 | 0,8 | 1,6 | 0 | 0 | -1,6 |
| Avant gauche/arrière droit | 0,8 | 1,6 | 1,6 | 0,8 | -1,6 | 0 | 0 |
| Avant droit/arrière gauche | 1,6 | 0,8 | 0,8 | 1,6 | 1,6 | 0 | 0 |
| Droite | 1,6 | 0,8 | 1,6 | 0,8 | 0 | 0 | 1,6 |
| Arrière | 1,6 | 1,6 | 0,8 | 0,8 | 0 | 1,6 | 0 |
| **3 crevaisons identiques** | | | | | | | |
| 2 avant + arrière gauche | 0,8 | 0,8 | 0,8 | 1,6 | 0,8 | -0,8 | -0,8 |
| 2 avant + arrière droit | 0,8 | 0,8 | 1,6 | 0,8 | -0,8 | -0,8 | 0,8 |
| 2 arrière + avant gauche | 0,8 | 1,6 | 0,8 | 0,8 | -0,8 | 0,8 | -0,8 |
| 2 arrière + avant droit | 1,6 | 0,8 | 0,8 | 0,8 | 0,8 | 0,8 | 0,8 |
| **4 crevaisons identiques** | 0,8 | 0,8 | 0,8 | 0,8 | 0 | 0 | 0 |

On constate que la prise en compte du seul premier indicateur Indic1 permet de déceler les situations de crevaison unique, de double crevaison sur deux roues en diagonale, et tous les cas de triple crevaison. En revanche, il n'est pas possible de localiser précisément la crevaison.

La prise en compte des premier et second indicateurs Indic1 et Indic2 permet en plus de détecter les cas de doubles crevaisons à l'avant ou à l'arrière. Dans les cas détectés, il est possible de localiser les crevaisons, mais de manière imparfaite. En effet, à chaque cas de crevaison unique correspond un cas de crevaison triple caractérisé par les mêmes valeurs des premier et second indicateurs. En d'autres termes, pour des valeurs de Indic1 et Indic2 données, on ne peut donc pas diagnostiquer avec certitude s'il s'agit d'une crevaison simple ou triple. Dans la pratique, ceci n'est pas gênant car la probabilité d'une crevaison triple est très faible, et on peut, en cas d'ambiguïté entre une crevaison simple ou triple, diagnostiquer avec une très faible risque d'erreur qu'il s'agit d'une crevaison simple et localiser celle-ci.

La prise en compte conjointe des premier, second et troisième indicateurs Indic1, Indic2 et Indic 3 permet de détecter toutes les situations, à l'exception du cas de quatre crevaisons identiques. Il est possible en plus de localiser sans ambiguïté la ou les crevaisons, puisque chaque situation correspond à une combinaison différente de valeurs des trois indicateurs.

Dans une variante de réalisation, les indicateurs peuvent être des rapports et pas des différences, et être calculés de la façon suivante :

$$\text{Indic1} = (G23 + G14) \ / \ (G24 + G13)$$

$$\text{Indic2} = (G23 + G24) \ / \ (G13 + G14)$$

$$\text{Indic3} = (G13 + G23) \ / \ (G14 + G24)$$

Le tableau 2 ci-dessous montre les valeurs adoptées par ces indicateurs dans des situations de vie correspondantes à celles du tableau 1, ces valeurs étant également données à titre indicatif.

| | valeurs estimées | | valeurs mesurées | | indicateurs | | |
|---|---|---|---|---|---|---|---|
| Situation | G23 | G24 | G13 | G14 | Indic1 | Indic2 | Indic3 |
| **Nominale** | 1,6 | 1,6 | 1,6 | 1,6 | 1,00 | 1,00 | 1,00 |
| **1 crevaison** | | | | | | | |
| Avant gauche | 0,8 | 1,6 | 1,6 | 1,6 | 0,75 | 0,75 | 0,75 |
| Avant droit | 1,6 | 0,8 | 1,6 | 1,6 | 1,33 | 0,75 | 1,33 |
| Arrière gauche | 1,6 | 1,6 | 0,8 | 1,6 | 1,33 | 1,33 | 0,755 |
| Arrière droit | 1,6 | 1,6 | 1,6 | 0,8 | 0,75 | 1,33 | 1,33 |
| **2 crevaisons identiques** | | | | | | | |
| Avant | 0,8 | 0,8 | 1,6 | 1,6 | 1,00 | 0,50 | 1,00 |
| Gauche | 0,8 | 1,6 | 0,8 | 1,6 | 1,00 | 1,00 | 0,50 |
| Avant gauche/arrière droit | 0,8 | 1,6 | 1,6 | 0,8 | 0,50 | 1,00 | 1,00 |
| Avant droit/arrière gauche | 1,6 | 0,8 | 0,8 | 1,6 | 2,00 | 1,00 | 1,00 |
| Droite | 1,6 | 0,8 | 1,6 | 0,8 | 1,00 | 1,00 | 2,00 |
| Arrière | 1,6 | 1,6 | 0,8 | 0,8 | 1,00 | 2,00 | 1,00 |
| **3 crevaisons identiques** | | | | | | | |
| 2 avant + arrière gauche | 0,8 | 0,8 | 0,8 | 1,6 | 1,50 | 0,67 | 0,67 |
| 2 avant + arrière droit | 0,8 | 0,8 | 1,6 | 0,8 | 0,67 | 0,67 | 1,50 |
| 2 arrière + avant gauche | 0,8 | 1,6 | 0,8 | 0,8 | 0,67 | 1,50 | 0,67 |
| 2 arrière + avant droit | 1,6 | 0,8 | 0,8 | 0,8 | 1,50 | 1,50 | 1,50 |
| **4 crevaisons identiques** | 0,8 | 0,8 | 0,8 | 0,8 | 1,00 | 1,00 | 1,00 |

Cette variante de réalisation offre les mêmes possibilités que le premier exemple de réalisation.

On va maintenant décrire un second exemple de réalisation, plus simple que le premier, dans lequel, à l'étape 2/, la valeur estimée Pe du paramètre représentatif P pour une roue arrière 13/14 est calculée en multipliant la valeur acquise Pa pour la roue avant 11/12 située du même côté par un gain prédéterminé K.

Ce gain peut être identique pour les côtés gauche et droit du véhicule ou peut être différent pour les deux côtés du véhicule.

Dans ce second exemple, on choisit comme paramètre représentatif P l'accélération verticale Ar au centre de roue, et comme grandeur représentative G la puissance de l'accélération verticale au centre de roue.

On appellera dans la suite :

- G11 à G14 les premières valeurs des puissances des accélérations verticales aux centres de ces roues 11 à 14, calculées à partir des valeurs acquises pour les accélérations verticales aux centres des roues 11 à 14,
- G23/G24 les secondes valeurs Pa de la puissance de l'accélération verticale au centre des roues arrière gauche et droite 13 et 14, calculées à partir des valeurs Pa acquises pour les accélérations verticales aux centres des roues avant 11 et 12.

Les secondes valeurs G23/G24 sont calculées de la façon suivante:

$G23 = K^2.G11$ et $G24 = K^2. G12$, en supposant que les gains sont les mêmes des deux côtés.

Les premier, second et troisième indicateurs sont calculés à l'aide des formules suivantes :

$$\begin{aligned}
\text{Indic1} \quad &= (G23 + G14) - (G24 + G13) \\
&= (K^2.G11 + G14) - (K^2. G12 + G13)
\end{aligned}$$

$$\begin{aligned}
\text{Indic2} \quad &= (G23 + G24) - (G13 + G14) \\
&= (K^2.G11 + K^2. G12) - (G13 + G14)
\end{aligned}$$

$$\begin{aligned}
\text{Indic3} \quad &= (G13 + G23) - (G14 + G24) \\
&= (G13 + K^2.G11) - (G14 + K^2. G12)
\end{aligned}$$

Le tableau 3 ci-dessous montre les valeurs adoptées par les premières valeurs de puissance G11 à G14 et par ces indicateurs dans des situations de vie correspondant à celles du tableau 1. Le gain est choisi ici tel que $K^2 = 1,6$, lesdites valeurs étant là aussi données à titre indicatif.

| Situation | valeurs mesurées | | valeurs mesurées | | indicateurs | | |
|---|---|---|---|---|---|---|---|
|  | G11 | G12 | G13 | G14 | Indic1 | Indic2 | Indic3 |
| **Nominale** | 1 | 1 | 1,6 | 1,6 | 0 | 0 | 0 |
| **1 crevaison** |  |  |  |  |  |  |  |
| Avant gauche | 0,5 | 1 | 1,6 | 1,6 | -0,8 | -0,8 | -0,8 |
| Avant droit | 1 | 0,5 | 1,6 | 1,6 | 0,8 | -0,8 | 0,8 |
| Arrière gauche | 1 | 1 | 0,8 | 1,6 | 0,8 | 0,8 | -0,8 |
| Arrière droit | 1 | 1 | 1,6 | 0,8 | -0,8 | 0,8 | 0,8 |
| **2 crevaisons identiques** |  |  |  |  |  |  |  |
| Avant | 0,5 | 0,5 | 1,6 | 1,6 | 0 | -1,6 | 0 |
| Gauche | 0,5 | 1 | 0,8 | 1,6 | 0 | 0 | -1,6 |
| Avant gauche/arrière droit | 0,5 | 1 | 1,6 | 0,8 | -1,6 | 0 | 0 |
| Avant droit/arrière gauche | 1 | 0,5 | 0,8 | 1,6 | 1,6 | 0 | 0 |
| Droite | 1 | 0,5 | 1,6 | 0,8 | 0 | 0 | 1,6 |
| Arrière | 1 | 1 | 0,8 | 0,8 | 0 | 1,6 | 0 |
| **3 crevaisons identiques** |  |  |  |  |  |  |  |
| 2 avant + arrière gauche | 0,5 | 0,5 | 0,8 | 1,6 | 0,8 | -0,8 | -0,8 |
| 2 avant + arrière droit | 0,5 | 0,5 | 1,6 | 0,8 | -0,8 | -0,8 | 0,8 |
| 2 arrière + avant gauche | 0,5 | 1 | 0,8 | 0,8 | -0,8 | 0,8 | -0,8 |
| 2 arrière + avant droit | 1 | 0,5 | 0,8 | 0,8 | 0,8 | 0,8 | 0,8 |
| **4 crevaisons identiques** | 0,5 | 0,5 | 0,8 | 0,8 | 0 | 0 | 0 |

On voit que les trois indicateurs prennent dans chaque situation des valeurs identiques à celles du premier exemple de réalisation.

Dans une variante de réalisation, les indicateurs peuvent être des rapports et pas des différences, et être calculés de la façon suivante :

$$\text{Indic1} = (K^2.G11+ G14) \ / \ (K^2. \ G12+ G13)$$

$$\text{Indic2} = (K^2.G11+ K^2. \ G12) \ / \ (G13 + G14)$$

$$\text{Indic3} = (G13 + K^2.G11) \ / \ (G14 + K^2. \ G12)$$

Le tableau 4 ci-dessous montre les valeurs adoptées par ces indicateurs dans des situations de vie correspondant à celles du tableau 3, ces valeurs étant encore données à titre indicatif.

| Situation | valeurs mesurées | | valeurs mesurées | | indicateurs | | |
|---|---|---|---|---|---|---|---|
| | G11 | G12 | G13 | G14 | Indic1 | Indic2 | Indic3 |
| **Nominale** | 1 | 1 | 1,6 | 1,6 | 1 | 1 | 1 |
| **1 crevaison** | | | | | | | |
| Avant gauche | 0,5 | 1 | 1,6 | 1,6 | 0,75 | 0,75 | 0,75 |
| Avant droit | 1 | 0,5 | 1,6 | 1,6 | 1,33 | 0,75 | 1,33 |
| Arrière gauche | 1 | 1 | 0,8 | 1,6 | 1,33 | 1,33 | 0,75 |
| Arrière droit | 1 | 1 | 1,6 | 0,8 | 0,75 | 1,33 | 1,33 |
| **2 crevaisons identiques** | | | | | | | |
| Avant | 0,5 | 0,5 | 1,6 | 1,6 | 1 | 0,5 | 1 |
| Gauche | 0,5 | 1 | 0,8 | 1,6 | 1 | 1 | 0,5 |
| Avant gauche/arrière droit | 0,5 | 1 | 1,6 | 0,8 | 0,5 | 1 | 1 |
| Avant droit/arrière gauche | 1 | 0,5 | 0,8 | 1,6 | 2 | 1 | 1 |
| Droite | 1 | 0,5 | 1,6 | 0,8 | 1 | 1 | 2 |
| Arrière | 1 | 1 | 0,8 | 0,8 | 1 | 2 | 1 |
| **3 crevaisons identiques** | | | | | | | |
| 2 avant + arrière gauche | 0,5 | 0,5 | 0,8 | 1,6 | 1,5 | 0,67 | 0,67 |
| 2 avant + arrière droit | 0,5 | 0,5 | 1,6 | 0,8 | 0,67 | 0,67 | 1,5 |
| 2 arrière + avant gauche | 0,5 | 1 | 0,8 | 0,8 | 0,67 | 1,5 | 0,67 |
| 2 arrière + avant droit | 1 | 0,5 | 0,8 | 0,8 | 1,5 | 1,5 | 1,5 |
| **4 crevaisons identiques** | 0,5 | 0,5 | 0,8 | 0,8 | 1 | 1 | 1 |

Cette variante de réalisation offre les mêmes possibilités que le premier exemple de réalisation.

La figure 3 représente le synoptique complet du premier exemple de réalisation, pour un véhicule équipé de capteurs 20 d'accélérations verticales au centre des roues avant droite et gauche et arrière droite et gauche.

Les valeurs courantes des accélérations verticales Ar aux centres des quatre roues sont acquises à l'étape 1/, et mises dans une mémoire tampon à l'étape 11/. Cette mémoire tampon contient au moins M valeurs de l'accélération pour chaque roue.

Parallèlement, la vitesse longitudinale du véhicule est mesurée ou est récupérée sur un calculateur existant à bord du véhicule, à une étape 12/.

Les première et seconde valeurs des puissances des accélérations verticales aux centres des roues sont calculées aux étapes 2/, 3/ et 4/, à partir des valeurs acquises stockées dans la mémoire tampon, en prenant en compte le décalage temporel entre les valeurs acquises pour les roues avant et celles acquises pour les roues arrière, ce décalage temporel étant évalué en fonction de la vitesse longitudinale acquise à l'étape 12/.

On calcule à l'étape 5/ la valeur du premier indicateur Indic1, et éventuellement des deux autres indicateurs Indic2 et Indic3.

L'étape 6/ se décompose en trois sous-étapes.

A la sous-étape 61/, les valeurs du ou des indicateurs Indic1, Indic2 et Indic3 sont corrigées en fonction de la température extérieure et de la vitesse longitudinale du véhicule, à l'aide de cartographies prédéterminées.

A la sous-étape 62/, les valeurs du ou des indicateurs Indic1, Indic2 et Indic3, après correction à la sous-étape 61/, sont comparées à des seuils de déclenchement prédéterminés, délimitant des fourchettes. L'alarme est déclenchée si les valeurs d'un ou plusieurs indicateurs sortent des fourchettes prédéterminées pendant une durée minimum prédéterminée, par exemple 3 minutes.

Quand l'alarme est déclenchée (sous-étape 63/), le conducteur est averti par un signal sonore et/ou visuel, par exemple un témoin lumineux ou un message s'affichant sur l'écran de l'ordinateur de bord. Ce message peut préciser la localisation du ou des pneumatiques présentant une anomalie.

L'alarme est arrêtée si les valeurs du ou des indicateurs passent sous des seuils d'arrêt, ces seuils étant de préférence inférieurs aux seuils de déclenchement en valeurs absolues pour éviter qu'il se produise des déclenchements et des arrêts de l'alarme en série quand les valeurs des indicateurs sont proches des seuils.

On comprend donc bien que la méthode de détection décrite ci-dessus, et les véhicules à bord desquels cette méthode est mise en oeuvre, présentent de multiples avantages.

La méthode est particulièrement simple et peu coûteuse. Elle demande au maximum l'ajout de capteurs pour chaque roue dans le but de mesurer le paramètre représentatif de l'effort vertical appliqué sur la roue, par exemple des accéléromètres.

Ces capteurs existent déjà sur certains véhicules, la méthode n'entraînant alors pratiquement aucun coût supplémentaire en matériel.

Elle peut également être mise en oeuvre en utilisant des données déjà disponibles à bord du véhicule. Dans ce cas encore elle n'entraîne aucun coût supplémentaire en matériel.

Elle est extrêmement fiable et ne dépend pas des conditions de roulement comme pour la méthode dite ABS.

Cette méthode est particulièrement bien adaptée à la détection de pertes de pression lentes, entraînant une dégradation progressive des conditions de conduite.

Elle permet de détecter pratiquement tous les cas de crevaisons multiples, à l'exception de crevaisons identiques sur les quatre roues.

Quand elle met en oeuvre un indicateur unique, la méthode permet de détecter une perte de pression, sans localisation de la roue concernée.

Quand elle met en oeuvre plusieurs indicateurs, la méthode permet de localiser la roue concernée.

On notera encore que la méthode s'applique à tous les véhicules à deux essieux, indépendamment du nombre de roues par essieu.

Elle s'applique par exemple à un véhicule comprenant deux roues sur l'essieu avant et quatre roues sur l'essieu arrière. On considère dans ce cas que la puissance à l'arrière gauche (G13/G23) prise en compte pour le calcul des indicateurs est la somme des puissances des deux roues arrière gauches. De même la puissance arrière droite (G14/G24) prise en compte pour le calcul des indicateurs est la somme des puissances des deux roues arrière droites.

La méthode s'applique encore à la détection de la surpression d'un pneumatique par rapport aux autres, par exemple d'un pneumatique trop gonflé par inattention.

## Revendications

1. Méthode de détection d'une anomalie de pression sur au moins un pneumatique d'un véhicule automobile pourvu d'au moins une roue (11, 12, 13, 14) à l'avant gauche et droit et à l'arrière gauche et droit, **caractérisée en ce que** cette méthode comprend au moins les étapes suivantes :

   1/ Acquisition périodique pour chaque roue (11, 12, 13, 14) d'une valeur (Pa) d'un paramètre (P) représentatif de l'accélération verticale (Ar) au centre de ladite roue,
   2/ Estimation pour chaque roue arrière (13, 14) d'une valeur estimée (Pe) dudit paramètre représentatif (P) à partir des valeurs (Pa) acquises à l'étape 1/ pour les roues avant (11, 12),

3/ Estimation pour chaque roue arrière (13, 14) d'une première valeur (G13, G14) d'une grandeur (G) représentative de la puissance de l'accélération verticale (Ar) au centre de ladite roue à partir des valeurs (Pa) acquises à l'étape 1/,

4/ Estimation pour chaque roue arrière (13, 14) d'une deuxième valeur (G23, G24) de ladite grandeur représentative (G) à partir des valeurs (Pe) estimées à l'étape 2/,

5/ Estimation d'un premier indicateur (Indic1) comparatif des première et seconde valeurs (G13, G14 ; G23, G24),

6/ Détection d'une éventuelle anomalie de pression à partir de la valeur du premier indicateur (Indic1) estimée à l'étape 5/.

2.  Méthode selon la revendication 1, **caractérisée en ce que** le paramètre (P) représentatif de l'accélération verticale (Ar) au centre de roue est choisi parmi l'accélération verticale (Ar) au centre de roue, l'accélération verticale (Ac) de la caisse au niveau de la roue, la vitesse verticale (Vr) au centre de roue, la vitesse verticale (Vc) de la caisse au niveau de la roue, la vitesse verticale relative caisse-roue (Vrel), la position verticale (Zr) du centre de roue, la position verticale (Zc) de la caisse au niveau de la roue , l'écartement vertical entre la caisse et la roue (Zrel), et l'effort vertical entre la caisse et la roue (Frel).

3.  Méthode selon la revendication 1 ou 2, **caractérisée en ce que** la grandeur (G) représentative de la puissance de l'accélération verticale au centre de roue est choisie parmi l'auto-corrélation de l'accélération verticale (Ar) au centre de roue sur une période d'observation donnée, la variance de ladite accélération sur ladite période, la densité spectrale de puissance de ladite accélération, ou toute autre fonction permettant de calculer la moyenne glissante sur une fenêtre de temps de termes homogènes au carré de l'accélération verticale au centre de la roue.

4.  Méthode selon l'une quelconque des revendications 1 à 3, **caractérisée en ce qu'**elle comprend une étape 5'/ d'estimation d'un second indicateur (Indic2) comparatif des première et seconde valeurs (G13, G14 ; G23, G24) différent du premier, la détection de l'étape 6/ étant effectuée à partir des valeurs des premier et second indicateurs (Indic1, Indic2) estimées aux étapes 5/ et 5'/.

5.  Méthode selon la revendication 4, **caractérisée en ce qu'**elle comprend une étape 5''/ d'estimation d'un troisième indicateur (Indic3) comparatif des première et seconde valeurs (G13, G14 ; G23, G24) différent des premier et second indicateurs (Indic1, Indic2), la détection de l'étape 6/ étant effectuée à partir des valeurs des premier, second et troisième indicateurs (Indic1, Indic2, Indic3) estimées aux étapes 5/, 5'/ et 5''/.

6.  Méthode selon l'une quelconque des revendications 1 à 5, **caractérisée en ce que** le premier indicateur (Indic1) ou l'un des indicateurs (Indic1, Indic2, Indic3) compare un premier terme fonction de la première valeur estimée pour la ou les roues arrière gauche (G13) et de la seconde valeur estimée pour la ou les roues arrière droite (G24) à un second terme fonction de la seconde valeur estimée pour la ou les roues arrière gauche (G23) et de la première valeur estimée pour la ou les roues arrière droite (G14).

7.  Méthode selon l'une quelconque des revendications 1 à 6, **caractérisée en ce que** le premier indicateur (Indic1) ou l'un des indicateurs (Indic1, Indic2, Indic3) compare un premier terme fonction des premières valeurs (G13, G14) à un second terme fonction des secondes valeurs (G23, G24).

8.  Méthode selon l'une quelconque des revendications 1 à 7, **caractérisée en ce que** le premier indicateur (Indic1) ou l'un des indicateurs (Indic1, Indic2, Indic3) compare un premier terme fonction des première et seconde valeurs estimées pour la ou les roues arrière gauche (G13, G23) à un second terme fonction des première et seconde valeurs estimées pour la ou les roues arrière droite (G14, G24).

9.  Méthode selon l'une quelconque des revendications 6 à 8, **caractérisée en ce que** la comparaison des premier et second termes est effectuée par différence entre les deux termes.

10. Méthode selon l'une quelconque des revendications 6 à 8, **caractérisée en ce que** la comparaison des premier et second termes est effectuée en calculant un rapport entre les deux termes.

11. Méthode selon l'une quelconque des revendications 1 à 10, **caractérisée en ce que**, à l'étape 2/, la valeur estimée (Pe) dudit paramètre représentatif pour une roue arrière (13, 14) est calculée en multipliant la valeur acquise (Pa) pour la roue avant (11, 12) située du même côté par un gain prédéterminé (K).

**12.** Méthode selon l'une quelconque des revendications 1 à 11, **caractérisée en ce que** le ou les indicateurs (Indic1, Indic2, Indic3) sont corrigés en fonction de la température extérieure et/ou de la vitesse du véhicule, à l'aide de cartographies prédéterminées.

**13.** Véhicule automobile pourvu d'au moins une roue (11, 12, 13, 14) à l'avant gauche et droit et à l'arrière gauche et droit, et de moyens pour mettre en oeuvre la méthode selon l'une quelconque des revendications précédentes, ces moyens comprenant :

1/ Des moyens d'acquisition périodique pour chaque roue (11, 12, 13, 14) d'une valeur (Pa) d'un paramètre représentatif (P) de l'accélération verticale (Ar) au centre de ladite roue,

2/ Des moyens d'estimation pour chaque roue arrière (13, 14) d'une valeur estimée (Pe) dudit paramètre représentatif (P) à partir des valeurs acquises (Pa) à l'étape 1/ pour les roues avant (11, 12),

3/ Des moyens d'estimation pour chaque roue arrière (13, 14) d'une première valeur (G13, G14) d'une grandeur (G) représentative de la puissance de l'accélération verticale (Ar) au centre de ladite roue à partir des valeurs (Pa) acquises à l'étape 1/,

4/ Des moyens d'estimation pour chaque roue arrière (13, 14) d'une deuxième valeur (G23, G24) de ladite grandeur représentative (G) à partir des valeurs (Pe) estimées à l'étape 2/,

5/ Des moyens d'estimation d'un premier indicateur (Indic1) comparatif des première et seconde valeurs (G13, G14 ; G23, G24),

6/ Des moyens de détection d'une éventuelle anomalie de pression à partir de la valeur du premier indicateur (Indic1) estimée à l'étape 5/.

Fig.1

Fig.2

_Fig 3_